# EUROPEAN PATENT APPLICATION

(11) **EP 2 521 061 A1**
(43) Date of publication of application: **07.11.2012**
(21) Application number: 11164662.6
(22) Date of filing: 03.05.2011
(51) Int. Cl.: G06F 21/00

(54) **Semantic access management engine and method for accessing data**

(71) Applicant: NXP B.V., 5656 AG Eindhoven (NL)
(72) Inventor: Roermund, Arthur Hubertus Maria, 5656 AG, Eindhoven (NL); Brands, Jan Rene, 5656 AG, Eindhoven (NL); Szostek, Lukasz, 5656 AG, Eindhoven (NL)
(74) Representative: Krott, Michel

(57) **Abstract**

A semantic access management engine for an access management system is provided, the semantic access management engine being arranged to receive definitions of users and data from a semantic model, the semantic access management engine further being arranged to receive access rules that define which users shall be granted access to which data; wherein the semantic access management engine is further arranged to generate, upon a request from a particular user, a license for accessing a particular piece of data if the particular user shall be granted access to the particular piece of data according to the access rules. Furthermore, a method for accessing data is provided which comprises the following steps: receiving definitions of users and data from a semantic model; receiving access rules that define which users shall be granted access to which data; generating, upon a request from a particular user, a license for accessing a particular piece of data if the particular user shall be granted access to the particular piece of data according to the access rules.

## Description

### FIELD OF THE INVENTION

The invention relates to a semantic access management engine for an access management system. The invention also relates to a method for accessing data.

### BACKGROUND OF THE INVENTION

In recent years, new application areas built around large information systems have become more and more important. For example, intelligent building control systems, eMetering and smart grid systems, and telematics systems have gained a lot of attention. All these systems have in common that they contain large amounts of information about their users and the behavior of these users. Security and privacy have become important topics for acceptance of such systems and, thereby, the components used to build these systems.

In order to preserve privacy within such systems, a data access management solution is required. Unfortunately, the existing or classic access management systems are application-specific and only enable relatively simple, predefined access control. These systems are typically used to manage access to data that is distributed to large numbers of users (e.g. movies, music) and they are not suited to manage the access to the personal content of individual users. Furthermore, they cannot be adapted to manage other types of data, such as the privacy-related data contained in the above-mentioned large information systems.

In order to preserve privacy and/or digital rights in these large information systems, a more advanced access management system is required, which supports functions such as access forwarding and emergency access (overruling). Preferably, such a system is both adaptive, such that it can be applied to a wide variety of (new) application areas, and reconfigurable, such that support for new use cases within an application can easily be added.

### SUMMARY OF THE INVENTION

It is an object of the invention to provide an access management system of the kind set forth which is adaptive and reconfigurable. The access management system should be adaptive in the sense that it should be applicable to a wide variety of new or existing application areas, and reconfigurable in the sense that it should be able to support new use cases within an application area.

This is achieved by the semantic access management engine according to claim 1 and the corresponding method for accessing data according to claim 8.

According to an aspect of the invention, a semantic access management engine for an access management system is provided, the semantic access management engine being arranged to receive definitions of users and data from a semantic model, the semantic access management engine further being arranged to receive access rules that define which users shall be granted access to which data; wherein the semantic access management engine is further arranged to generate, upon a request from a particular user, a license for accessing a particular piece of data if the particular user shall be granted access to the particular piece of data according to the access rules.

By decoupling the conceptual application-specific knowledge contained in the semantic model and its associated access rules, which basically define the rights to access certain data, from the actual processing of these rights in order to grant physical access to the data, the access management system according to the invention is both adaptive and reconfigurable. The semantic access management engine functions as an interface between the conceptual application-specific knowledge of the access rights and the access control mechanism which implements the access.

According to another aspect of the invention, an integrated circuit comprising such a semantic access management engine is provided. Furthermore, the integrated circuit that comprises the semantic access management engine is implemented on a smart card or in a mobile device.

According to a further aspect of the invention, an access management system comprising such a semantic access management engine is provided, the access management system further comprising a system modeling and rule management system comprising the semantic model, the access rules and an authentication engine being arranged to authenticate the access rules and to output the authenticated access rules; wherein the semantic access management engine is arranged to receive the authenticated access rules and the request to access the particular piece of data, and wherein the semantic access management engine is arranged to generate the license according to the authenticated access rules; the access management system further comprising an access control engine being arranged to receive the license and to grant access to the particular piece of data.

According to a further aspect of the invention, the access rules comprise high-level rules and the system modeling and rule management system comprises a translation and authentication engine being arranged to generate authenticated low-level access rules based on translational information from the semantic model.

According to a further aspect of the invention, the system modeling and rule management system is integrated into a cloud system.

According to a further aspect of the invention, the access control engine is integrated into a database back-end system.

According to a further aspect of the invention, the semantic access management engine is further arranged to sign the generated license, and the access control engine is further arranged to verify the signature of the license in order to authenticate said license.

According to a further aspect of the invention, a method for accessing data is provided which comprises the following steps: receiving definitions of users and data from a semantic model; receiving access rules that define which users shall be granted access to which data; generating, upon a request from a particular user, a license for accessing a particular piece of data if the particular user shall be granted access to the particular piece of data according to the access rules.

According to a further aspect of the invention an alternative embodiment of an access management system according to the invention is provided which comprises: a system modeling and rule management system comprising a semantic model, access rules that define which users shall be granted access to which data, and an authentication engine being arranged to authenticate the access rules and to output the authenticated access rules; an access control processing unit comprising a semantic access management engine and an access control engine; wherein the semantic access management engine is arranged to receive definitions of users and data from the semantic model and to receive the authenticated access rules, wherein the semantic access management engine is further arranged to instruct, upon a request from a particular user to access a particular piece of data, the access control engine to grant access to the particular piece of data if the particular user shall be granted access to the particular piece of data according to the authenticated access rules, wherein the access control engine is arranged to grant access to the particular piece of data upon said instruction from the semantic access management engine.

### BRIEF DESCRIPTION OF THE DRAWINGS

The invention will be described in more detail with reference to the appended drawings, in which:
Fig. 1 illustrates an embodiment of a semantic access management engine according to the invention;
Fig. 2 illustrates a first embodiment of an access management system according to the invention;
Fig. 3 illustrates an example of a hierarchy of access rules according to the invention;
Fig. 4 illustrates a second embodiment of an access management system according to the invention;
Fig. 5 illustrates an embodiment of an alternative access management system according to the invention.

### DESCRIPTION OF PREFERRED EMBODIMENTS

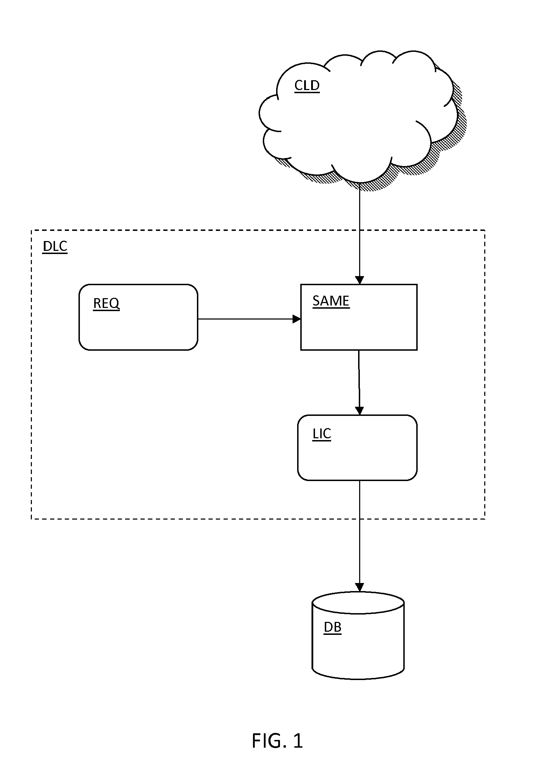

Fig. 1 illustrates an embodiment of a semantic access management engine according to the invention. The semantic access management engine SAME implements a dynamic license creation function DLC. In operation, a request for access to data REQ is done. The access request REQ has context information. The access request REQ and its context contain at least an identifier of the requester, an identifier of the particular data to be accessed and the type of access. The data to be accessed may either be a class of data or instances or data objects within a class. The type of access may be read, write or delete access, for example. In addition, application-dependent access request information may be included. For example, in some application areas emergency access requests can be implemented by a special kind of context. Furthermore, the context may include additional information to identify the information requester, for example via a code (PIN or password) or biometric information (fingerprint or iris scan).

In operation, the semantic access management engine SAME processes application-specific information on users (for example, types of users) and data (for example, audio and/or video content, documents, files, and many more, including both classes of data and particular instances of such classes). Furthermore, the semantic access management engine SAME processes access rules associated to these users. In particular, the access rules specify which users shall be granted access to which particular data. The application-specific information and the access rules are advantageously contained in a so-called cloud system CLD which is typically accessible via a network or the internet. After processing of the application-specific information and the associated access rules, the semantic access management engine SAME generates a license for accessing the particular data. The actual data to be accessed is typically stored in a database back-end system DB. Optionally, the generated license is signed by the semantic access management engine SAME for authentication purposes. In that case the signature of the license may be verified in the database back-end system DB, for example.

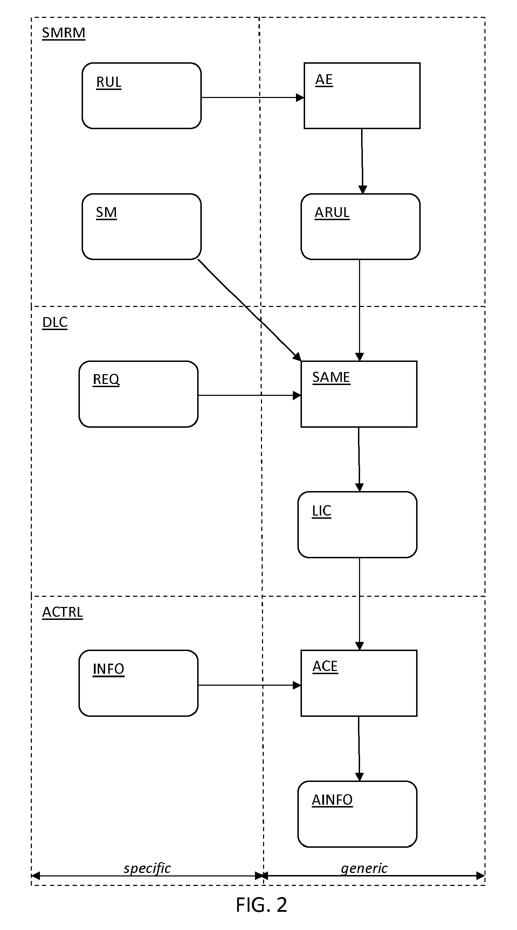

Fig. 2 illustrates a first embodiment of an access management system according to the invention. The access management system includes the dynamic license creation function DLC. Furthermore, the above-mentioned application-specific information - consisting of definitions of users and data - is contained in a semantic model SM. In operation, the associated access rules RUL are authenticated by an authentication engine AE. Both the application-specific information and the authenticated access rules ARUL serve as input to the semantic access management engine SAME. An access control function ACTRL comprises an access control engine ACE for receiving the license LIC and granting access AINFO to particular data. The authenticated rules ARUL may be verified by the semantic access management engine SAME. The license LIC may be verified by the access control engine ACE.

In more general terms, a semantic model is a model that represents knowledge about a certain application area or domain. A semantic model typically consists of a set of concepts and relationships. Concepts represent a particular piece of knowledge about the application domain, for example, that a doctor shall be granted access to the medical files of his patients and that a nurse shall be granted access to files relating to medication or nutrition.

An example of a semantic model is a so-called ontology. The following ontologies have been described in the prior art:
● Roberto García González has taken a semantic approach, based on web ontologies, to digital rights management (DRM). His work has resulted in a copyright modeling framework based on a copyright ontology (see Roberto García González. Copyright licenses reasoning using an OWL-DL ontology, Proceeding of the 2009 conference on Law, Ontologies and the Semantic Web: Channelling the Legal Information Flood; and Roberto García González. A semantic web approach to digital rights management, technical report, Universitat Pompeu Fabra, 2005). This ontology formalizes copyright law aspects and is based on the World Intellectual Property Organization (WIPO) recommendations, which try to define a common worldwide legal framework;
● the NIST Smart Grid Conceptual model, which establishes an Ontology for the Smart Grid and the Interoperability Knowledge Base (IKB) (see *NIST Smart Grid Conceptual Framework,* accessible via http://smartgrid.ieee.org/nist-smartgrid-framework, and *NIST Smart Grid Interoperability Knowledge Base,* accessible via http://collaborate.nist.gov/twiki-sggrid/bin/view/SmartGrid/ InteroperabilityKnowledgeBase);
● the Ontology for Hospital Scenarios (OntHoS), Marc Becker, Christian Heine, Rainer Herrler, and Karl-Heinz Krempels (see OntHoS - an Ontology for Hospital Scenarios, 2002, accessible via http://citeseerx.ist.psu.edu/viewdoc/summary?doi=10.1.1.19.9220) which was developed by a couple of research projects dealing with the application of agent systems in hospital scenarios, to establish a basis for a description of these scenarios and to facilitate their interoperability.

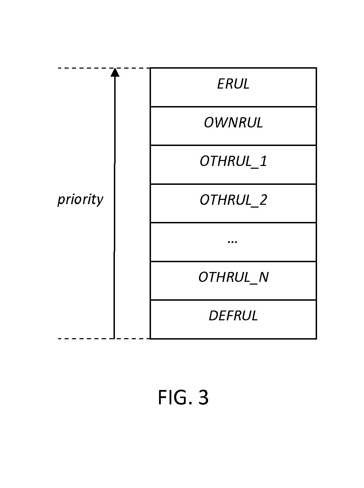

Fig. 3 illustrates an example of a hierarchy of access rules according to the invention. Access rules determine which users have access to which data under which conditions, and depending on the application area, different hierarchies of access rules may exist. There can be multiple access rules for a single piece of information, for example, rules that specify how access should be granted in case of an emergency, rules that are defined by the owner of the information, rules that are defined by an authorized user or a delegate, etc. In this example, the access rules having the highest priority are emergency rules ERUL. In case of conflicts between access rules, emergency access will overrule any other access rule. Next, there are access rules OWNRUL defined by the owner of the information. Next, there are access rules defined by delegates on different levels in the hierarchy OTHRUL_1, OTHRUL_2 ... OTHRUL_N. At the lowest level of the hierarchy the default access rules DEFRUL are provided.

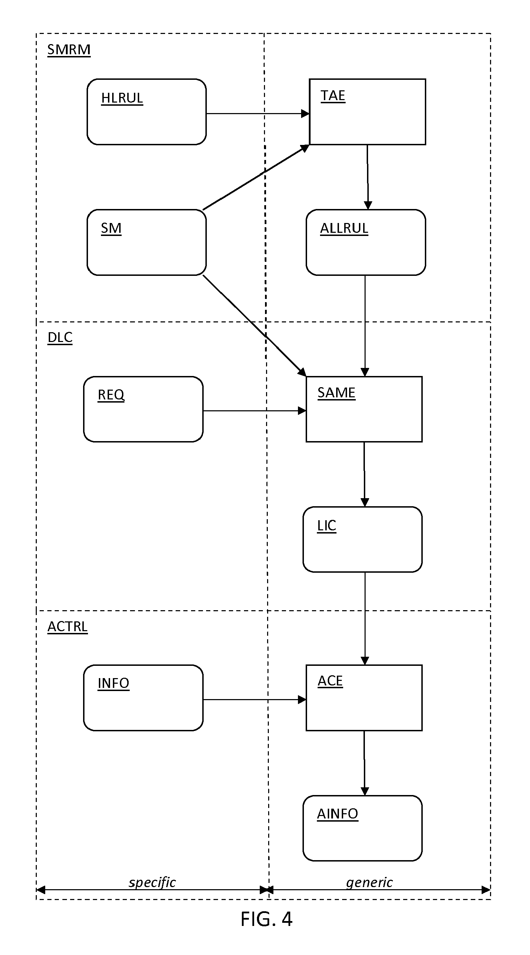

Besides the hierarchy of access rules a distinction can be made between high-level access rules and low-level access rules, as will be explained with reference to Fig. 4. This is particularly advantageous because it enables the use of a high-level language for rule specification, which in turn makes it much easier for human beings to specify the access rules.

Fig. 4 illustrates a second embodiment of an access management system according to the invention. The second embodiment differs from the first embodiment in that, within the system modeling and rule management part SMRM of the access management system, a translation and authentication engine TAE is provided instead of an authentication engine AE. The translation and authentication engine TAE translates the high-level access rules HLRUL into low-level rules which can be processed by the semantic access management engine SAME. Then, it authenticates the rules and outputs authenticated low-level access rules ALLRUL.

The dynamic license creation function DLC and the access control part ACTRL of the access management system are the same as in the first embodiment. So, although the translation of high-level rules into low-level rules is generally a computation-intensive task, it can be done off-line by a cloud system, and both the semantic access management engine SAME and the access control engine ACE do not need to be changed. Therefore, a flexible and user-friendly access management system can be realized without the need to adapt engines implemented in devices such as smart cards and databases.

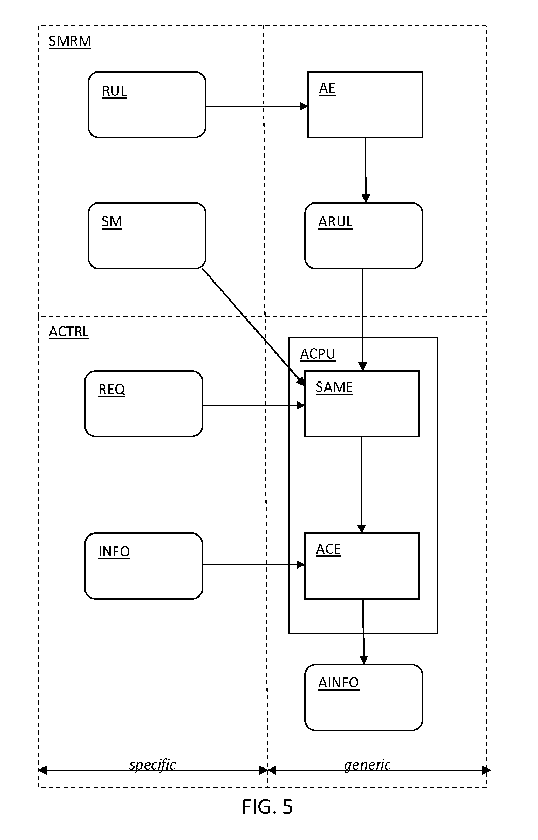

Fig. 5 illustrates an embodiment of an alternative access management system according to the invention. This embodiment provides an alternative solution in the sense that the semantic access management engine SAME and the access control engine ACE are integrated into a single access control processing unit ACPU. Instead of generating a license the semantic access management engine SAME sends an instruction to the access control engine ACE to grant access AINFO to the particular piece of data INFO. The advantage of this alternative embodiment is that there is no overhead of generating a license, but the semantic access management engine SAME and access control engine ACE must be implemented in a relatively close relationship, for example, within a single processing unit ACPU as illustrated in Fig. 5.

The above-mentioned preferred embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SYMBOLS

- CLD: cloud system
- DLC: dynamic license creation
- REQ: requests
- SAME: semantic access management engine
- LIC: licenses
- DB: database system
- SMRM: system modeling and rule management
- RUL: rules
- AE: authentication engine
- ARUL: authenticated rules
- SM: semantic model
- ACTRL: access control
- INFO: information
- ACE: access control engine
- AINFO: access to information
- ERUL: emergency rules
- OWNRUL: rules defined by owner
- OTHRUL_1: rules defined by others (1^{st} level)
- OTHRUL_2: rules defined by others (2^{nd} level)
- OTHRUL_N: rules defined by others (N^{th} level)
- DEFRUL: default rules
- HLRUL: high-level rules
- TAE: translation and authentication engine
- ALLRUL: authenticated low-level rules

## Claims

1. A semantic access management engine (SAME) for an access management system,
the semantic access management engine (SAME) being arranged to receive definitions of users and data from a semantic model (SM),
the semantic access management engine (SAME) further being arranged to receive access rules (RUL) that define which users shall be granted access to which data;
wherein the semantic access management engine (SAME) is further arranged to generate, upon a request from a particular user (REQ), a license (LIC) for accessing a particular piece of data (INFO) if the particular user shall be granted access to the particular piece of data (INFO) according to the access rules (RUL).

2. An integrated circuit comprising a semantic access management engine (SAME) as claimed in claim 1.

3. A smart card comprising an integrated circuit as claimed in claim 2.

4. A mobile device comprising an integrated circuit as claimed in claim 2.

5. An access management system comprising a semantic access management engine (SAME) as claimed in claim 1, the access management system further comprising:
a system modeling and rule management system (SMRM) comprising the semantic model (SM), the access rules (RUL) and an authentication engine (AE) being arranged to authenticate the access rules (RUL) and to output the authenticated access rules (ARUL);
wherein the semantic access management engine (SAME) is arranged to receive the authenticated access rules (ARUL) and the request (REQ) to access the particular piece of data (INFO), and wherein the semantic access management engine (SAME) is arranged to generate the license (LIC) according to the authenticated access rules (ARUL);
the access management system further comprising an access control engine (ACE) being arranged to receive the license (LIC) and to grant access (AINFO) to the particular piece of data (INFO).

6. An access management system as claimed in claim 5, wherein the access rules (RUL) comprise high-level rules (HLRUL) and the system modeling and rule management system (SMRM) comprises a translation and authentication engine (TAE) being arranged to generate authenticated low-level access rules (ALLRUL) based on translational information from the semantic model (SM).

7. An access management system as claimed in claim 5 or 6, wherein the system modeling and rule management system (SMRM) is integrated into a cloud system (CLD).

8. An access management system as claimed in any one of claims 5 to 7, wherein the access control engine (ACE) is integrated into a database back-end system (DB).

9. An access management system as claimed in any one of claims 5 to 8, wherein the semantic access management engine (SAME) is further arranged to sign the generated license (LIC), and wherein the access control engine (ACE) is further arranged to verify the signature of the license (LIC) in order to authenticate said license (LIC).

10. A method for accessing data comprising the following steps:
- receiving definitions of users and data from a semantic model (SM);
- receiving access rules (RUL) that define which users shall be granted access to which data;
- generating, upon a request from a particular user (REQ), a license (LIC) for accessing a particular piece of data (INFO) if the particular user shall be granted access to the particular piece of data (INFO) according to the access rules (RUL).

11. An access management system comprising:
- a system modeling and rule management system (SMRM) comprising a semantic model (SM), access rules (RUL) that define which users shall be granted access to which data, and an authentication engine (AE) being arranged to authenticate the access rules (RUL) and to output the authenticated access rules (ARUL);
- an access control processing unit (ACPU) comprising a semantic access management engine (SAME) and an access control engine (ACE);
wherein the semantic access management engine (SAME) is arranged to receive definitions of users and data from the semantic model (SM) and to receive the authenticated access rules (ARUL),
wherein the semantic access management engine (SAME) is further arranged to instruct, upon a request from a particular user (REQ) to access a particular piece of data (INFO), the access control engine (ACE) to grant access (AINFO) to the particular piece of data (INFO) if the particular user shall be granted access to the particular piece of data (INFO) according to the authenticated access rules (ARUL),
wherein the access control engine (ACE) is arranged to grant access to the particular piece of data (INFO) upon said instruction from the semantic access management engine (SAME).
